Europäisches Patentamt

European Patent Office

Office européen des brevets

(19)

(11) Veröffentlichungsnummer: **0 076 979**
**B1**

(12) # EUROPÄISCHE PATENTSCHRIFT

(45) Veröffentlichungstag der Patentschrift:
**27.12.85**

(21) Anmeldenummer: **82109053.7**

(22) Anmeldetag: **30.09.82**

(51) Int. Cl.⁴: **B 65 D 5/44, B 65 D 5/42, B 29 C 31/00**

(54) **Packung für fliessfähige Füllgüter mit Verstärkungsstreifen.**

(30) Priorität: **10.10.81 DE 3140336**

(43) Veröffentlichungstag der Anmeldung:
**20.04.83 Patentblatt 83/16**

(45) Bekanntmachung des Hinweises auf die Patenterteilung:
**27.12.85 Patentblatt 85/52**

(84) Benannte Vertragsstaaten:
**AT BE CH DE FR GB IT LI NL SE**

(56) Entgegenhaltungen:
**DE - A - 2 257 913**
**FR - A - 752 229**
**FR - A - 2 209 693**
**FR - A - 2 346 128**
**GB - A - 649 066**
**US - A - 1 850 164**
**US - A - 3 421 678**

(73) Patentinhaber: **Tetra Pak Développement SA, 70, Avenue C.-F. Ramuz, CH-1003 Pully-Lausanne (CH)**

(72) Erfinder: **Reil, Wilhelm, Altengassweg 16, D-6142 Bensheim 1 (DE)**

(74) Vertreter: **Weber, Dieter, Dr. et al, Dr. Dieter Weber und Klaus Seiffert Patentanwälte Gustav-Freytag-Strasse 25 Postfach 6145, D-6200 Wiesbaden 1 (DE)**

**Beschreibung**

Die Erfindung betrifft eine Packung für fließfähige Füllgüter, bestehend aus mit Hilfe mindestens einer Siegelnaht verbundenen Seiten- und Endwänden aus beschichtetem Papier, Karton oder dergleichen, in welchem Biegelinien vorgesehen sind. Derartige Packungen gehören zum Stand der Technik.

Bekannt sind Packungen für Flüssigkeiten aus auf beiden Seiten mit Kunststoff beschichtetem Papier, welches man auch als Pappe oder Karton bezeichnen könnte. Solche Packungen werden insbesondere zur Verbreitung von Milch verwendet. Es gibt verschiedenste Formen von Milchpackungen, unter anderem auch die parallelepipedische Form. Alle Milchpackungen weisen aber mindestens eine Siegelnaht auf, längs welcher die zunächst eben von einer Vorratsrolle abgezogene Papierbahn zu einem Tubus verschlossen wird. Es versteht sich, daß bei den mit Kunststoff beschichteten Papierbahnen das Verschließen durch Schweißen bzw. Siegeln erfolgt.

Bei den meisten Flüssigkeitspackungen ist mindestens an einer Seite derselben ein Muster von Biegelinien in die Papierbahn eingebracht, um das maschinelle Falten, Formen und Versiegeln zu erleichtern. Es ist auch bekannt, daß durch das Umbiegen bzw. Falzen des Papieres, welches in der Regel zuvor schon mit Kunststoff beschichtet ist, durch Spannungen im Papier oder durch Eingriffe der Werkzeuge Beschädigungen der Papierbahn auftreten, zumindest aber in der Kunststoffbeschichtung der Bahn. Hierdurch aber werden die Packungen flüssigkeitsdurchlässig, was verständlicherweise unerwünscht ist. Gerade durch das Einwirken von Siegelbacken auf mit Kunststoff beschichteten Papierbahnen und das Zerlaufen des Kunststoffes durch die Wärmeeinwirkung ergeben sich unerwünschte Leckagestellen. Um dieses zu verhindern, hat man die Papierträgermaterialbahn mit einer entsprechend dicken Schicht Kunststoff belegt, damit die vorstehend erwähnten Nachteile nicht auftreten können.

Um bei der Herstellung der in Massenfabrikation erzeugten Flüssigkeitspackungen Material einzusparen, insbesondere Kunststoff, ist man bestrebt, entgegen dem vorstehend erläuterten Sicherheitsbestreben die Kunststoffbeschichtung doch wieder dünner auszugestalten. Man hat daher schon überlegt, Verstärkungsstreifen aus Kunststoff auf besonders gefährdete Stellen aufzusiegeln. Solche Verfahren haben bislang aber nicht zu dem gewünschten Erfolg geführt, denn einerseits ergeben sich durch die ganzflächige Aufsiegelung der Verstärkungsstreifen auf die mit dünner Kunststoffschicht belegte Papierbahn nach wie vor beim Biegen oder Schweißen Beschädigungen, die wiederum in der oben beschriebenen Weise zu Leckagestellen führen können.

Aufgabe der Erfindung ist daher die Schaffung einer Packung der eingangs bezeichneten Art, bei der die Biegelinien trotz dünner Kunststoffgesamtbeschichtung der Papierbahn auch bei der Bearbeitung in der Herstellungsmaschine unbeschädigt bleiben.

Die Erfindung betrifft ferner eine Vorrichtung zur Herstellung einer solchen Packung, mit einer auf einer Seite der beschichteten Papierbahn angeordneten Vorratsrolle einer Kunststoffolie und mit zwei gegeneinanderwirkenden Siegelbakken, von denen mindestens einer beweglich angeordnet ist.

Hinsichtlich der Vorrichtung richtet sich die Aufgabe der Erfindung auf eine Verbesserung dahingehend, daß der Verstärkungsstreifen aus Kunststoff an der gewünschten Stelle unter den gegebenen Bedingungen einwandfrei aufbringbar ist, ohne daß der gesamte Produktionsablauf der Packungsherstellung verlangsamt wird.

Hinsichtlich der Packung wird die Aufgabe erfindungsgemäß dadurch gelöst, daß im Bereich mindestens einiger Biegelinien wenigstens ein diese übergreifender Verstärkungsstreifen aus Kunststoff derart angebracht ist, daß die Schweiß- und Kontaktfläche des Verstärkungsstreifens mit dem beschichteten Karton von allen Seiten her im Abstand vor den Biegelinien endet. Man hat herausgefunden, daß die ganzflächige Aufsiegelung von Verstärkungsstreifen nachteilig ist, weil beim Biegen in der Verstärkungszone hohe Spannungen auf Teile des Verstärkungsstreifens aufgebracht werden, die zu undichten Stellen führen könnten. Wenn erfindungsgemäß die Schweiß- und Kontaktfläche zwischen dem Verstärkungsstreifen und der dünnbeschichteten Papierbahn vor der jeweiligen Biegelinie endet und erst danach wieder beginnt, und zwar im Bereich aller Biegelinien, dann wird innerhalb des Verstärkungsstreifens ein Biegelinienmuster entsprechend dem in der Papierbahn eingebrachten Muster von Biegelinien geschaffen. Es versteht sich, daß der im Bereich der jeweiligen Biegelinie nicht angeschweißte Verstärkungsstreifen etwaige Dehnungen wesentlich besser übersteht. Mit anderen Worten ist die Linienbreite der schweißfreien Zone zwischen Verstärkungsstreifen und beschichteter Papierbahn gleich breit oder breiter als die in der Papierbahn eingebrachten Biegelinien selbst. An denjenigen Stellen, wo sich Biegelinien schneiden, ergeben sich mehr oder weniger kreisförmige Kreuzpunkte, die als kritische Stellen besonders und vor allen Dingen vollständig von schweißfreien Zonen des Verstärkungsstreifens abgedeckt sind. Erst im Abstand um diese Zone herum ist der Verstärkungsstreifen dann wieder auf die mit Kunststoff beschichtete Papierbahn aufgesiegelt. Daher ist es besonders vorteilhaft, wenn der Verstärkungsstreifen im Bereich mindestens einiger solcher Stellen angebracht ist, wo wenigstens zwei Biegelinien zusammenlaufen. Zur Bildung eines Packungsendes bzw. des Verschlusses der Packung an deren einer Seite durch Falten der Papierbahn und dichtendes Versiegeln müssen insbesondere an den Stellen, wo zwei oder drei Biegelinien zusammenlaufen, sei es, daß sie sich an diesen Stellen treffen oder kreuzen, teilweise sehr starke Biegungen vorgenommen werden. An einigen Stellen ist es unvermeidlich, eine Biegung der beschichteten Papierbahn um z. B. 180° vorzunehmen. Es versteht sich, daß im Außenbereich eine erhebliche Dehnung auftritt und eine ganzflächig aufgesiegelte sehr dünne Kunststoffolie auf dem Papier durch derart starkes Biegen aufreißen könnte. Ist aber an diesen Stellen erfindungsgemäß der Verstärkungsstreifen in der oben beschriebenen Weise angebracht, daß nämlich der schweißfreie Bereich zwischen dem Verstärkungsstreifen aus Kunststoff und dem dünnbeschichteten Karton im Abstand von den Kreuzstellen und über diese hinwegreichend vorgesehen ist, dann übernimmt ein sehr viel weniger beanspruchter Kunststoff-Abdeckstreifen die Abdichtung, so daß die bisweilen beobachteten Leckagepunkte an diesen kritischen Stellen nicht mehr auftreten.

Auf diese Weise ist es möglich, eine Flüssigkeitspackung zu schaffen, die auf der Trägermaterialbahn, d. h. auf dem reinen Papier, eine besonders dünne Kunststoffschicht aufweist, so daß hierdurch erhebliche Mengen Kunststoff eingespart werden können. Dennoch trifft der Verbraucher eine gut funktionierende Flüssigkeitspackung an, d. h. sie ist dicht und bei entsprechender Ausgestaltung gut zu öffnen. Die Dichtigkeit, nämlich die Vermeidung der gefährlichen Leckagestellen, wird durch Auflegen des Verstärkungsstreifens in der oben beschriebenen Weise erreicht.

Zweckmäßig ist es gemäß der Erfindung ferner, wenn der Bereich der Biegelinien auf die Klotzbodenzone an einem Ende der Packung beschränkt ist. Zur weiteren Materialeinsparung von Flüssigkeitspackungen ist man zu einem möglichst weitgehend runden Querschnitt der Packung übergegangen, weil dieser pro eingesetztem Verpackungsmaterial ein maximales Füllvolumen bietet. Hier hat man z. B. eine Packung vorgeschlagen, die aus einem Tubus mit Deckel und Boden besteht. Während der Tubus aus der mit Kunststoff beschichteten Papierbahn hergestellt ist, besteht der Deckel aus thermoplastischem Kunststoff ohne Trägermaterial. Der Boden hingegen ist als sogenannter Klotzboden ausgebildet mit der üblichen viereckigen Gestalt mit umgefalteten Dreiecklappen. Setzt man eine derart ausgestaltete Packung im Sinne dieser Erfindung ein, dann genügt das Aufbringen nur eines einzigen Verstärkungsstreifens, nämlich an derjenigen Stelle des Zuschnittes der Packung, welche die Klotzbodenzone darstellt.

Besonders zweckmäßig ist es dabei, wenn sich erfindungsgemäß der Bereich der Biegelinien auf dem Zuschnitt der Packung nur auf dessen einem Rand befindet und der Verstärkungsstreifen die Form eines länglichen Rechteckes hat. Es versteht sich, daß hierdurch die Maschine vereinfacht werden kann und die Taktzeiten insgesamt bei den modernen schnellaufenden Maschinen hochgehalten werden können.

Hinsichtlich der Vorrichtung zur Herstellung der Packung der vorstehend genannten Art wird die Aufgabe gemäß der Erfindung dadurch gelöst, daß die der zu behandelnden Oberfläche der Papierbahn zugerichtete Fläche der Siegelbacke wenigstens teilweise entsprechend dem Muster der Biegelinien angeordnete Nuten aufweist. Die Querschnittsform der Nuten kann viereckig, insbesondere rechteckig, oder auch gerundet, insbesondere kreisrund, oval oder dergleichen sein. Die Nuten halten den Bereich der Biegelinie von einem Schweiß- bzw. Siegeleingriff der Siegelbacke mit der dünnbeschichteten Papierbahn frei. Selbst kleine Beschädigungen der dünnen Kunststoffbeschichtung im Bereich des Verstärkungsstreifens werden durch ein Aufbringen des Verstärkungsstreifens aus Kunststoff mit dieser Herstellungsvorrichtung wieder abgedichtet. Neue Leckagestellen sind darüberhinaus nicht zu befürchten, denn der aufgelegte Verstärkungsstreifen bildet im Bereich der Biegelinien lose und gegenüber der Papierbahn verschiebliche Bereiche, die beim Aufbringen von Spannungen erhebliche Belastungen aufnehmen können, ohne zu reißen.

Zweckmäßig ist es erfindungsgemäß, wenn quer zur Transportrichtung der Papierbahn verlaufend die Drehachse der Vorratsrolle angeordnet ist. Im Gegensatz zu bereits angestellten Überlegungen, einen oder mehrere Verstärkungsstreifen von der Seite quer zur Transportrichtung bzw. Bewegungsrichtung auf die Papierbahn aufzubringen, erlaubt die Anordnung der Vorratsrolle in dem vorstehend beschriebenen Sinne eine lange Einsatzzeit, denn weil der Verstärkungsstreifen häufig verhältnismäßig schmal ist, braucht man auf diese Weise nur wenig Rollenwechsel in den Ablauf des gesamten Herstellungsverfahrens mit einzubeziehen.

Eine weitere bevorzugte Ausführungsform der Erfindung ist dadurch gekennzeichnet, daß die auf der zu behandelnden Seite der Papierbahn angeordnete Siegelbacke etwa senkrecht zur Ebene der Papierbahn beweglich angetrieben und mit einer Trennschweißeinrichtung versehen ist. Vorzugsweise ist die Herstellungsvorrichtung so aufgebaut, daß die zunächst eben liegende und mit Kunststoff dünn beschichtete Papierbahn horizontal transportiert wird und im Verlaufe dieser Förderbewegung der Verstärkungsstreifen von oben auf die Papierbahn aufgelegt wird. Mit anderen Worten befindet sich die zu behandelnde Oberfläche der Papierbahn oben, während die Gegenbacke stationär unten so angeordnet ist, daß die Papierbahn über diese hinweg gefördert wird. Das Aufsiegeln des Verstärkungsstreifens erfolgt selbstverständlich taktweise, so daß die Papierbahn nur dann vortransportiert wird, wenn sich die vorzugsweise vertikal bewegliche obere Siegelbacke im abgehobenen Zustand befindet. Durch die Trennschweißeinrichtung, die vorzugsweise an der Hinterkante der Siegelbacke angeordnet wird —

in Transportrichtung der Papierbahn gesehen — erübrigt sich eine gesonderte Schneideinrichtung, zumal die Wärme zum Trennschweißen ohnehin vorhanden ist. Bei der Verwendung des von Fachleuten für besonders einfach erachteten Trennschweißens kann man mit Vorteil auch überhängende oder hochstehende Ränder am aufgesiegelten Verstärkungsstreifen verhindern, so daß eine etwaige Verschmutzungsgefahr ausgeschaltet ist. Mit der im vorstehenden Sinne gekennzeichneten Herstellungsvorrichtung erreicht man eine Versiegelung des Verstärkungsstreifens mit der Papierbahn bis zur Trennstelle hin.

Es ist sogar zweckmäßig, wenn die Siegelbacke an ihrer Hinterkante ein oder zwei Millimeter beispielsweise über den Verstärkungsstreifen bzw. den Bereich, auf welchem er aufzusiegeln ist, hinüberreicht. Dann ist die Versiegelung ohne jeden Zweifel auch bei Toleranzen bis an den Rand des Verstärkungsstreifens sichergestellt, und eine Beschädigung der Kunststoffschicht auf der Papierbahn erfolgt deshalb nicht, weil der Zuschnitt an dieser Stelle, insbesondere beim Einsatz der oben stehend beschriebenen Packung mit dem Klotzboden, am Rand des Verstärkungsstreifens endet.

Vorteilhaft ist es gemäß der Erfindung ferner, wenn mindestens eine synchron zur Bewegung der Siegelbacke gesteuert bewegbare Klemmeinrichtung zum Vorschieben der Kunststoffolie um die Breite des Verstärkungsstreifens zwischen Siegelbacke und Papierbahn vorgesehen ist. Diese Klemmeinrichtung kann mit Vorteil auch mit der Trennschweißeinrichtung dahingehend zusammenwirken, daß unmittelbar nach dem Trennschweißvorgang eine kurzzeitige Rückzugbewegung der Folienbahn von dem zuletzt angesiegelten Verstärkungsstreifen erfolgt, damit ein sauberer Schnitt entsteht und ein Ausfransen vermieden wird.

Zweckmäßig ist es, wenn das Nachziehen des nächsten Verstärkungsstreifens von der Vorratsrolle über eine beweglich angeordnete und antreibbare Nachzugrolle derart erfolgt, daß die erwähnte Klemmeinrichtung nach der kurzzeitigen Rückzugbewegung die Folienbahn auf einer Zuführfläche festklemmt, so daß die Bewegung der Nachzugrolle durch Vergrößerung des Weges der Folienbahn von der Vorratsrolle abzieht.

Weitere Vorteile, Merkmale und Anwendungsmöglichkeiten der vorliegenden Erfindung ergeben sich aus der folgenden Beschreibung im Zusammenhang mit den Zeichnungen. Es zeigt

Fig. 1 perspektivisch eine besonders bevorzugte Packung, deren deckelseitige Stirnwand aus Kunststoff ohne Trägermaterial besteht, deren bodenseitige Stirnwand hingegen bei dieser Ausführungsform quadratisch und in der Form eines Klotzbodens ausgestaltet ist,

Fig. 2 die tubusförmigen Seitenwände der Packung der Fig. 1 in umgedrehter Anordnung, so daß der noch nicht ganz fertiggestellte Boden dem Betrachter gegenüber oben zu liegen kommt,

Fig. 3 zur Veranschaulichung der Führung der Biegelinien das bodenseitige Ende der tubusförmigen Seitenwände der Packung nach Fig. 2,

Fig. 4 in Seitenansicht schematisch die Vorrichtung zum Aufbringen des Verstärkungsstreifens auf die Papierbahn,

Fig. 5 unter Weglassung einiger maschinenbaulicher Einzelelemente schematisch die Vorrichtung zum Aufbringen des Verstärkungsstreifens in Perspektive,

Fig. 6 abgeschnitten ein Stück der Papierbahn mit dem Muster der Biegelinie an den einzelnen Zuschnitten,

Fig. 6a vergrößert und abgebrochen einen Teil der Nuten in der Siegelbacke entsprechend dem Biegelinienmuster,

Fig. 7 in Querschnittsansicht die Siegelbacke unter schematischer Darstellung ihrer Eingriffstätigkeit,

Fig. 8 einen Teil der Vorschub- und Steuereinrichtung für die Kunststoffbahn zum Aufbringen von Verstärkungsstreifen auf die Papierbahn und

Fig. 9 die gleiche Maschine wie in Fig. 8, wobei jedoch andere Maschinenbauelemente zur Erläuterung des Zuführens des jeweiligen Verstärkungsstreifens dargestellt sind.

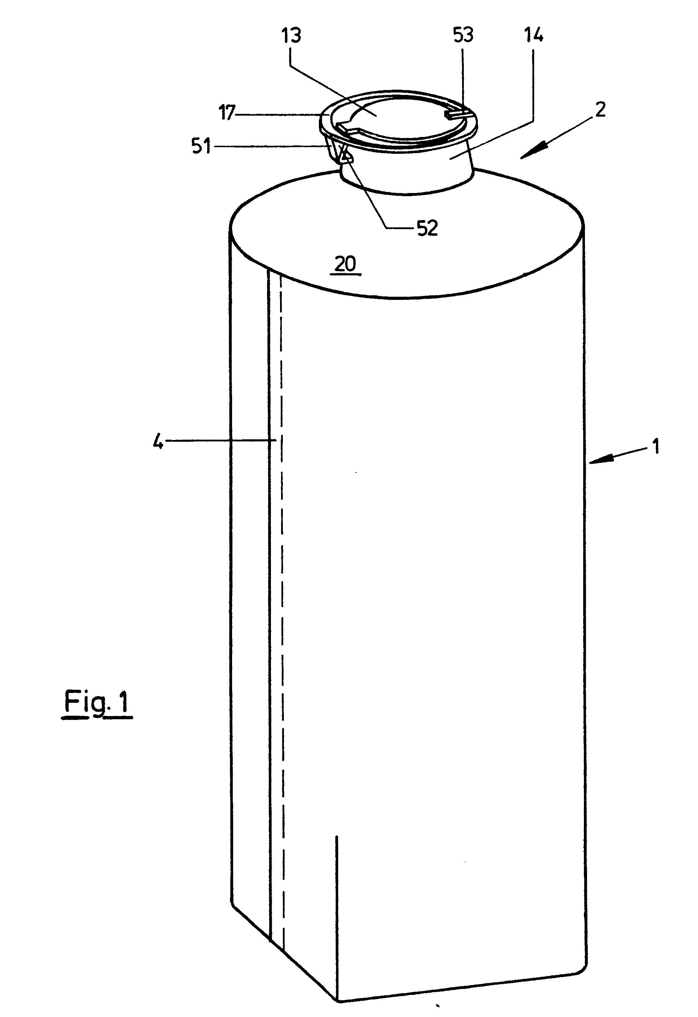

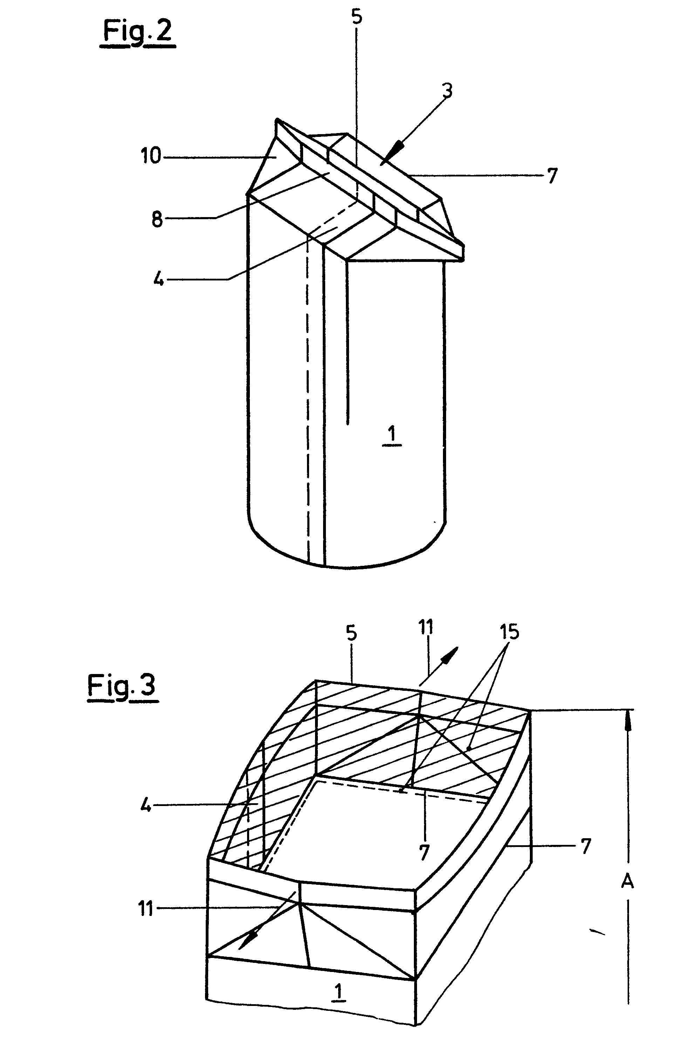

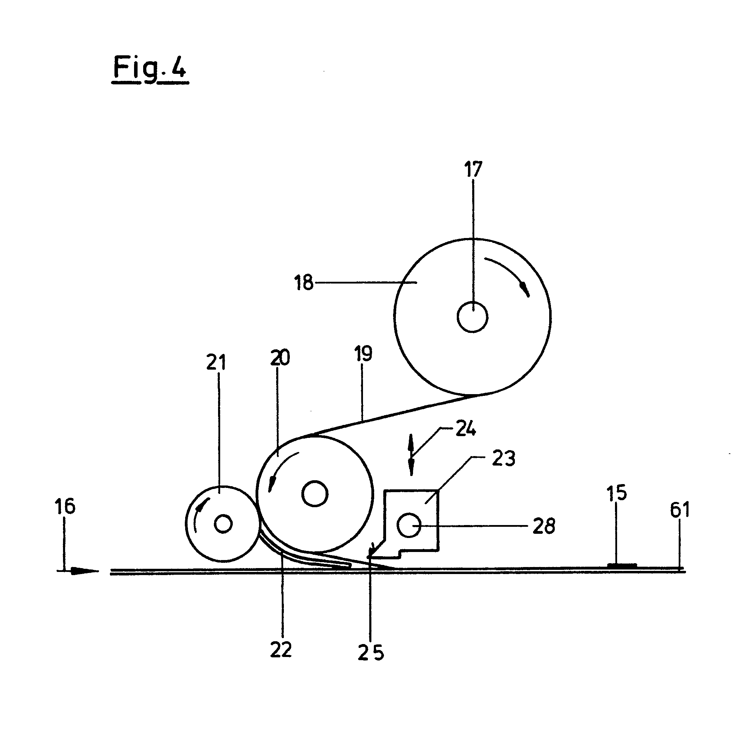

Die in Fig. 1 in Perspektive fertiggestellt und in den Fig. 2 und 3 nur teilweise dargestellte spezielle Packung besteht aus tubusförmig geformten Seitenwänden 1, einem an der Oberseite in Fig. 1 angespritzten Deckel 2 aus Kunststoff ohne Trägermaterial und einem auf der dem Deckel 2 gegenüberliegenden Seite angeordneten Boden 3. Aus der bei der Herstellung dieser Packung zunächst eben liegenden Papierbahn 61 (siehe Fig. 4 bis 9) werden die tubusförmigen Seitenwände 1 zu dem in den Fig. 1 und 2 dargestellten Tubus über eine Längssiegelnaht 4 verschlossen. Der Deckel wird bei dieser Packung nach Erstellung des Tubus, d. h. nach Fertigung der Längssiegelnaht 4 in Fig. 1, oben angespritzt. Er besteht aus einer kegelstumpfförmigen Deckelwand 20, aus der ein zylindermantel- oder schwach kegelstumpfförmiger Tüllenrand 10 mittig hochsteht. Letzterer ist mittels eines Verschlusses 13 verschlossen, der über eine Lasche 53 mit dem Greifring 17 verbunden ist. Für den Verschluß 13 sieht man auch das Scharnier 52, während der Greifring 17 über das Heftband 51 am Scharnier angeheftet ist. Zum Öffnen reißt der Benutzer das Heftband 51 ab, zieht den Greifring 17 hoch und reißt damit den Verschluß 13 vom Tüllenrand 14 ab. Die auf diese Weise geöffnete Packung ist mit Hilfe des Verschlusses 13 und seines Scharniers 52 wieder verschließbar.

Auf der dem Deckel 2 der Packung der Fig. 1 gegenüberliegenden Seite befindet sich der besonders deutlich aus den Fig. 2 und 3 erkennbare Boden 3. Man sieht, daß die Längssiegelnaht 4 hier in den doppelten Kartonstreifen 8 übergeht und die Packung an dieser Seite letztlich am Rand 5 endet. Durch das Einfalten in der in Fig. 2 gezeigten Weise bilden sich die in den Fig. 2 und 3 gezeigten Linien 7 heraus, die gemäß Fig. 2 die Packung begrenzen und im folgenden zusammen mit den anderen Linien die Biegelinien 7 repräsentieren. Wenn man das zum Viereck gemäß Fig. 3 gefaltete Bodenende in der mit den Pfeilen 11 gezeigten Weise auseinanderzieht und entsprechend den Biegelinien 7 in den Zustand der Fig. 2 faltet, ergeben sich auch die doppelwandigen Dreiecklappen 10. Es braucht an dieser Stelle nicht näher darauf eingegangen zu werden, daß der doppelte Kartonstreifen 8 nach dem Füllen der Packung dichtend versiegelt wird und die Dreiecklappen nach dem Umfalten auf den Boden dort angeheftet werden.

Diese somit erstellte Flüssigkeitspackung weist an ihrem bodenseitigen Ende, besonders deutlich aus Fig. 3 ersichtlich, einen Verstärkungsstreifen im Bereich aller Biegelinien 7 auf, der die Biegelinien vollständig übergreift und in bestimmter Weise auf die Innenseite der dünn mit Kunststoff beschichteten Papierbahn so aufgeschweißt ist, daß die Schweiß- und Kontaktfläche zwischen dem Verstärkungsstreifen 15 einerseits und der beschichteten Papierbahn andererseits von allen Seiten her im Abstand vor den Biegelinien 7 endet, wie genauer nachfolgend noch erläutert wird.

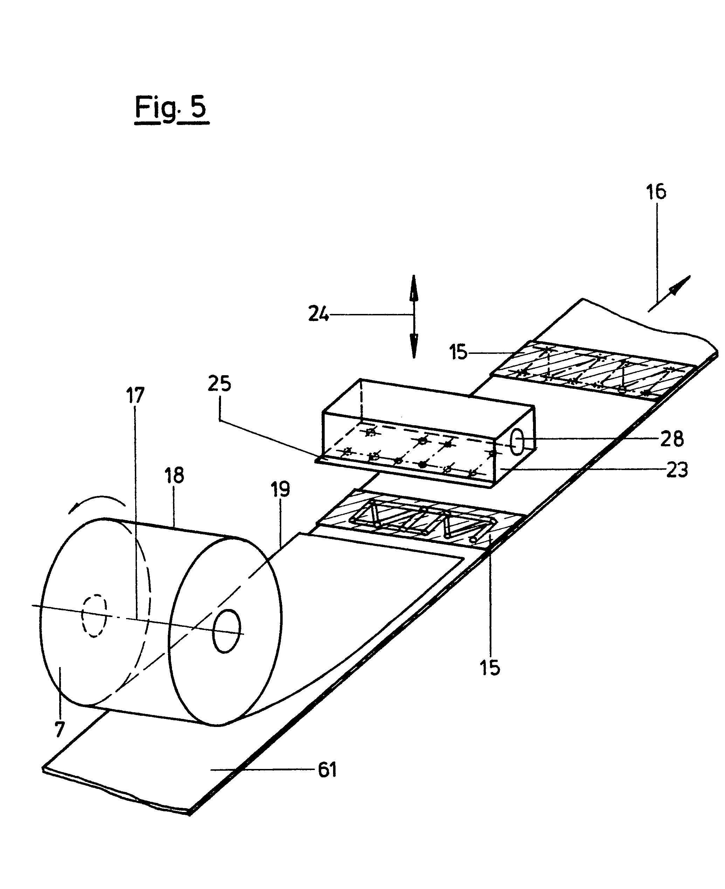

In den Fig. 4 und 5 ist schematisch erst einmal das Prinzip gezeigt, wie der Verstärkungsstreifen 15 auf die dünn mit Kunststoff 62 beschichtete Papierbahn 61 aufgesiegelt wird. Quer zur Transportrichtung der Papierbahn 61, die durch den Pfeil 16 dargestellt ist, verläuft die Drehachse 17 der Vorratsrolle 18 mit der Kunststoffolie, die in Form der Bahn 19 in Richtung des Pfeiles 20 abgezogen wird. In Fig. 4 ist die Führung der Folienbahn 19 über die Antriebsrolle 20 und Gegenrolle 21 und dann über ein Führungsblech 22 unter die obere Siegelbacke 23 gezeigt. Die untere Siegelbacke ist in den Figuren nicht dargestellt. Die Siegelbacke 23 befindet sich auf der Seite der Papierbahn 61, deren Oberfläche bzw. Kunststoffbeschichtung 62 behandelt werden soll, d. h. mit dem Verstärkungsstreifen 15 verbunden werden soll. Die Siegelbacke 23 ist gemäß dem Doppelpfeil 24 vertikal auf- und abbewegbar angeordnet.

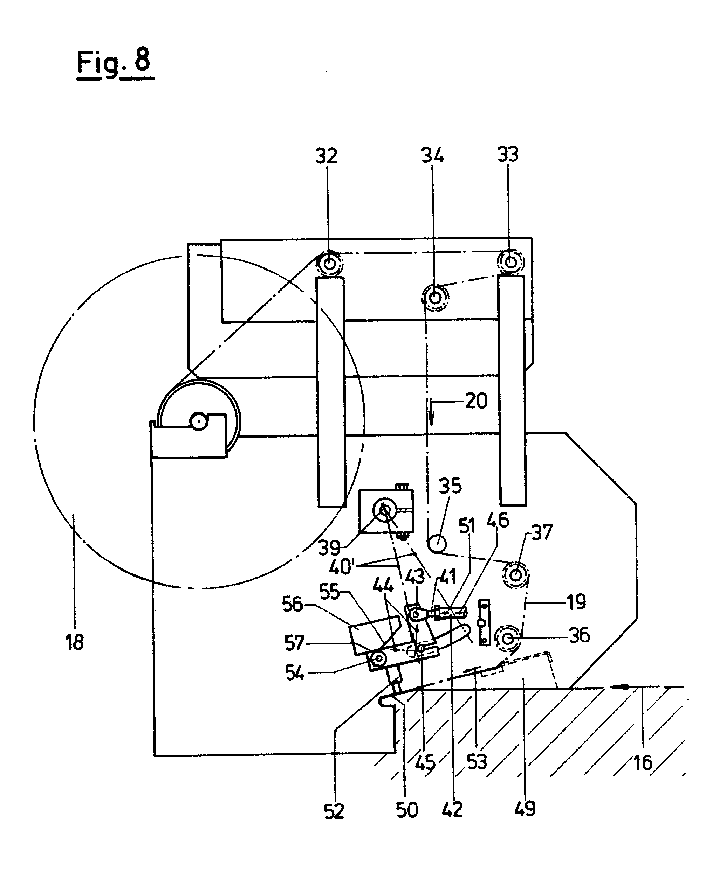

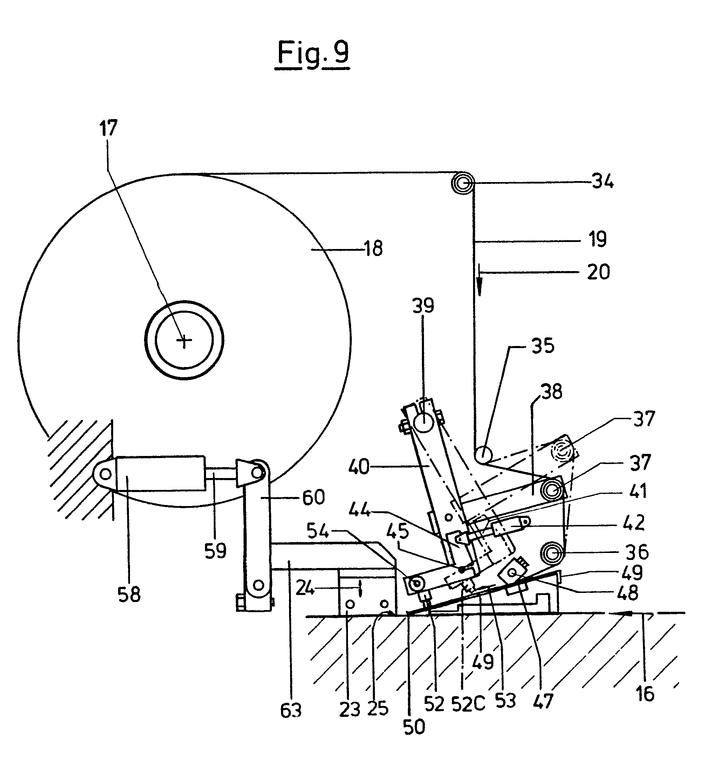

Der Betrieb der Vorrichtung verläuft schematisch gemäß den Fig. 4 und 5 derart, daß die Antriebsrolle 20 die Folienbahn 19 jeweils um die Breite eines Verstärkungsstreifens 15 intermittierend unter die Siegelbacke 23 mit einer Vorschubeinrichtung vorschiebt, die später anhand der Fig. 8 und 9 näher erläutert wird. Befindet sich das Vorderende der Folienbahn 19, d. h. der als nächster aufzusiegelnde Verstärkungsstreifen 15 unter der Siegelbacke 23 und über der richtigen Stelle an der Papierbahn 61, dann fährt die Siegelbacke gemäß Teil 24 nach unten und siegelt den Verstärkungsstreifen 15 auf. Gleichzeitig hiermit erfolgt das Trennschweißen über die Trennschweißeinrichtung 25, die beispielsweise ein ausgestellter Keil nach den Fig. 4, 5 und 7 oder eine Kante 25' gemäß Fig. 9 sein kann. Ist die Erweichungstemperatur bzw. Trennschweißtemperatur erreicht, erfolgt durch kurzzeitige Umkehr der Antriebsrichtung der Rolle 20 ein Abreißen der Folienbahn 19 vom angesiegelten Verstärkungsstreifen 15. Die Papierbahn 61 wird dann weiter nach vorn in Richtung des Pfeiles intermittierend vorbewegt, und dann beginnt der Vorschub der Folienbahn 19 zum Auflegen des nächsten Verstärkungsstreifens erneut. Die Vorschiebe- bzw. Rückzugbewegung erfolgt bei der anhand der Fig. 8 und 9 beschriebenen konkreten Ausführungsform etwa anders, nämlich nicht mit Antriebsrolle 20 und Gegenrolle 21.

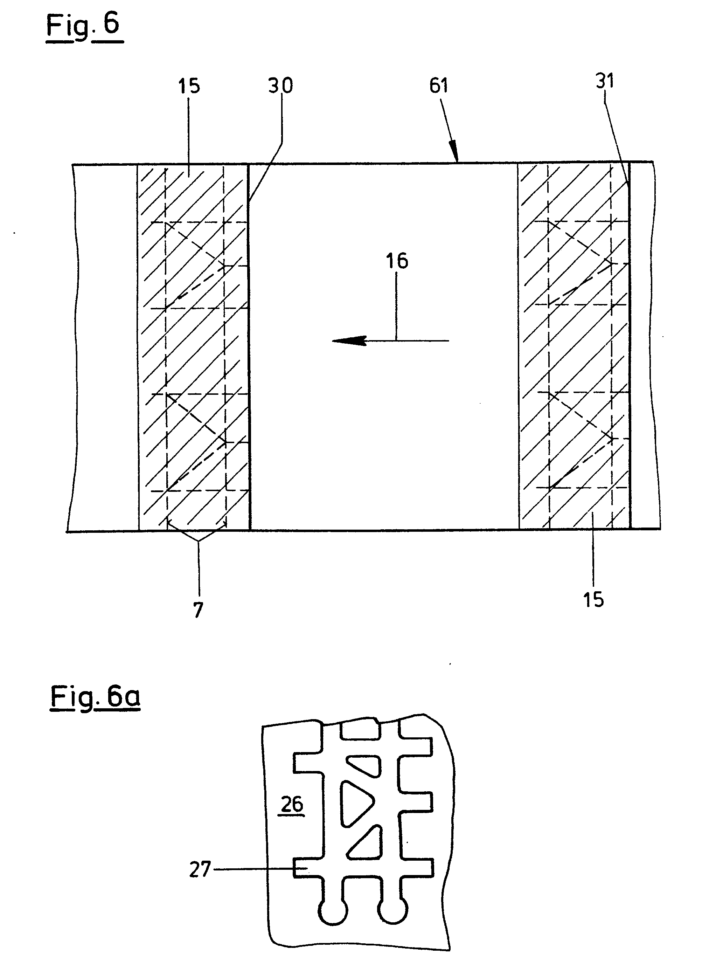

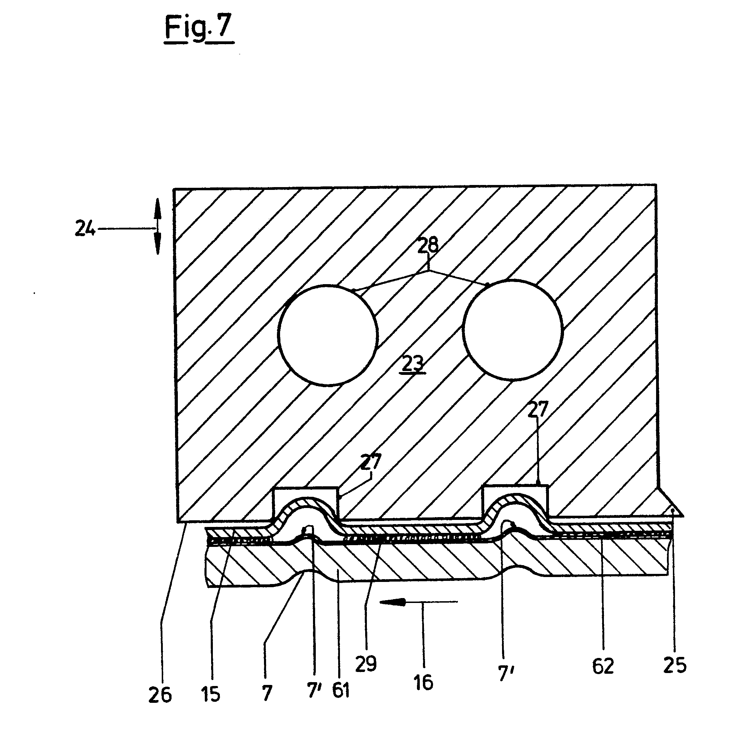

Anhand der Fig. 5 bis 7 erkennt man die der dünnen oberen Kunststoffschicht bzw. der zu behandelnden Oberfläche 62 der Papierbahn 61 zugerichteten Fläche 26 der Siegelbacke 23, die in der direkten Draufsicht gemäß Fig. 6a aussieht, mit einem kanalähnlichen Muster, welches dem Muster der Biegelinien 7 entspricht, welches in Fig. 6 zu erkennen ist. Dieses Muster der Fig. 6 in der Behandlungsoberfläche 26 der Siegelbacke 23 entsteht durch Nuten 27, deren Querschnitt am besten aus Fig. 7 zu erkennen ist. Das Kanalsystem der Fig. 6a bedeutet also nichts anderes als in der Oberfläche eingelassene Nuten 27 in einer Form, welche dem Muster der Biegelinien 7 in der Papierbahn 61 entspricht. Es könnte auch genügen, nur die kritischen Stellen zu verstärken.

In der Querschnittsdarstellung der Fig. 7 ist von unten nach oben die in Richtung des Pfeils 16 sich bewegende Papierbahn 61 mit der dünnen Kunststoffschicht 62 gezeigt. Diese beschichtete Papierbahn 61 mit der Kunststoffschicht 62 weist an zwei herausgegriffenen Stellen die Biegelinien 7 auf derart, daß sich auf der Oberseite die dünne Kunststoffschicht 62 zusammen mit der Papierbahn 61 bei 7' rillenartig erhöht. Darüber ist der Verstärkungsstreifen 15 aufgelegt gezeigt (alle Schichten 61, 62, 65 sind rechts und links abgebrochen) und wölbt sich über die Rippen 7' mehr oder weniger in die Nuten 27 der Siegelbacke 23 hinein, wobei die Wölbungen und Nuten übertrieben deutlich gezeichnet sind. Dafür sind beispielsweise Heiz- oder Kühlkanäle 28 nur sehr schematisch angedeutet. Zwischen dem Verstärkungsstreifen 15 und der dünnen Kunststoffschicht 61 erkennt man in Fig. 7 Schweiß- und Kontaktflächen 29, die sich ersichtlich nur dort unter der einwirkenden Oberfläche 26 der Siegelbacke 23 ergeben, wo keine Nuten 27 vorhanden sind. Mit anderen Worten endet jeweils die Schweiß- und Kontaktfläche 29 zwischen Verstärkungsstreifen 15 einerseits und der dünnen Kunststoffschicht 62 der Papierbahn 61 andererseits vor der Biegelinie 7, um danach bis zur nächsten Biegelinie weiterzulaufen und so fort. Im Bereich der Biegelinie selbst befindet sich also eine schweißfreie Zone.

Zur Erstellung der Seitenwände 1 der Packung nach den Fig. 1 bis 3, einschließlich Boden 3, eignet sich der in Fig. 6 gezeigte Zuschnitt, der hier direkt zwischen zwei weiteren Zuschnitten unter Bildung der Papierbahn 61 in Richtung des Pfeiles 16 von rechts nach links geführt wird. Der Zuschnitt beginnt also an der Kante 30 und endet an der Kante 31, an welcher der nächstfolgende Zuschnitt beginnt. Man erkennt übrigens die einfache, viereckige Form des Zuschnittes, auf dem sich der Bereich der Biegelinie 7 nur am rechten bzw. in Transportrichtung 16 gesehen hinteren Rand befindet. Der Verstärkungsstreifen 15 kann hier die Form eines länglichen Rechteckes haben und wird am rechten Rand neben der Linie 61 auf dem schattiert dargestellten Bereich aufgesiegelt.

Eine andere und besonders bevorzugte Ausführungsform der Vorschubeinrichtung für die Folienbahn 19 zur Bildung der Verstärkungsfolien 15 wird nun anhand der Fig. 8 und 9 erläutert.

Von der Vorratsrolle 18 wird über Umlenkrollen 32, 33, 34, 35 und 36 die Folienbahn 19, hier Polyäthylen, über einen Antrieb abgezogen, der in Fig. 9 in Form einer Nachzugrolle 37 gezeigt ist. Diese sitzt über einem Arm 38 an einem um einen oberen Drehpunkt 39 drehbaren Hebel 40, der in Fig. 8 nur in Form von Radien 40' schematisch angedeutet ist. In seinem unteren Bereich greift ein Stößel 41 eines Pneumatikzylinders 42 am oberen Drehpunkt 43 eines L-winkelförmigen Hebels 44 an, der am Hebel 40 um den Drehpunkt 45 drehbar gelagert ist. Zieht der Stößel 41 den Hebel 40 in Richtung des Pfeiles 46 nach rechts, dann wird die Nachzugrolle 37 in Fig. 9 aus der Stellung A in die Stellung B bewegt. Da eine aus Gummileiste 47 höherer Friktion und drehbarem Teil 48 bestehende Rücklaufsperre die Folienbahn 19 im Bereich der Gummileiste 47 gemäß Fig. 9 festhält, wird beim Hochschieben der Nachzugrolle 37 in die Position B ein Stück Folienbahn 19 von der Vorratsrolle 18 abgezogen und im Bereich der Nachzugrolle 37 gespeichert.

Durch die Bewegung des Stößels 41 des Pneumatikzylinders 42 in Richtung des Pfeiles 46 nach rechts und damit die Schwenkung des Hebels 40 um den oberen Drehpunkt 39 im Gegenuhrzeigersinn ist auch der Winkelhebel 44 in die in Fig. 9 gestrichelt angedeutete Position C bewegt worden. Die Folienbahn 19 befindet sich in diesem Zustand über einem keilförmigen Schiebeblech 49 derart, daß die Vorderkante 50 in einem geringen Abstand von beispielsweise 5 mm von der Trennschweißkante 25' der Siegelbacke 23 angeordnet ist.

Wird die Antriebsrichtung des Pneumatikzylinders 42 umgekehrt, so daß der Stößel 41 sich nun nach links in Richtung des Pfeiles 51 bewegt, wird die Rücklaufsperre dadurch aufgehoben, daß der drehbare Pfeil 48 von der Gummileiste 47 abgehoben wird. Gleichzeitig kann sich der Winkelhebel 44 um seinen Drehpunkt 45 in Gegenuhrzeigersinn drehen, so daß ein Gummistempel 52 mit seiner Oberfläche höherer Friktion etwa in der Stellung 52 C in Fig. 9 sich nach unten bewegt und auf die Folienbahn 19 in Druckanlage kommt.

Damit sich der Winkelhebel 44 beim Schwenken des Hebels 40 in Uhrzeigerrichtung mit Sicherheit in Gegenuhrzeigerrichtung um den Drehpunkt 45 drehen kann, ist der obere Drehpunkt 39 des Hebels 40 schwergängig, d. h. er bewirkt eine gewisse Bremsung der Drehung des Hebels 40.

Durch die Anlage des Gummistempels 52 oben auf die Folienbahn 19 kann diese auf dem keilförmigen Schiebeblech 49 gleitend mit dem Winkelhebel 8 nach links unten vorbewegt werden in Richtung des Pfeiles 53, denn der Winkelhebel 44 bewegt sich zusammen mit dem Hebel 40 bei anliegendem Gummistempel 52 durch die Bewegung des Stößels 41 nach links in Richtung des Pfeils 51.

Während dieser Bewegung läuft eine am linken äußeren Arm des Winkelhebels 44 befestigte Rolle 54 in Abstand unter einer Schrägfläche 55 eines Führungswinkels 56, der etwa im Bereich links neben der Anlenkstelle 43 des Stößels 41 am Winkelhebel 44 angeordnet ist. Wenn die Vorderkante 50 der Folienbahn 19 die Trennschweißkante bzw. hintere Kante 25' der Siegelbacke 23 erreicht hat, hat sich die Rolle 54 um die oben beispielsweise ausgewählten genannten 5 mm von der schrägen Fläche 55 des Führungswinkels 56 nach links auf einer Nockenfläche 57 bewegt, die dafür sorgt, daß der Gummistempel 52 in sicherer Druckanlage auf der Folienbahn 19 verbleibt.

Die Vorderkante 50 der Folienbahn ist einerseits die Vorderkante des nächsten Verstärkungsstreifens 15, gleichzeitig aber auch die Vorderkante des nachfolgend herangeschobenen Verstärkungsstreifens 15 im Verband mit der Folienbahn 19. Ist also der eben genannte Zustand der Lage der Rolle 54 unter der Nockenfläche 57 erreicht, ist gemäß Fig. 9 die Siegelbacke 23 in Richtung des Pfeils 24 nach oben abgehoben und der vorderste Verstärkungsstreifen 15 ist unter der Siegelbacke 23 so angeordnet, daß seine Hinterkante unter der Trennschweißkante 25' liegt, neben der in der vorstehend beschriebenen Weise die Vorderkante des nächsten Verstärkungsstreifens 15 und damit die Vorderkante 50 der Bahn 19 liegt.

Nachdem über den Pneumatikzylinder 58 der Kolben 59 den Antriebshebel 60 und damit den Stützarm 63 der Siegelbacke 23 so gedreht hat, daß die Siegelbacke in Richtung des Pfeiles 24 nach unten fest aufgepreßt ist und die Siegel- sowie Trennschweißtemperatur erreicht ist, erfolgt die oben schon in anderem Zusammenhang erwähnte Rücklaufbewegung der Folienbahn 19 um die genannten 5 mm, so daß die Vorderkante 50 der Folienbahn 19 wieder die Stellung der Fig. 9 erreicht.

Diese Rücklaufbewegung erfolgt dadurch, daß die Antriebsrichtung des Pneumatikzylinders 42 umgekehrt wird, so daß sich der Stößel 41 wieder in Richtung des Pfeiles 46 nach rechts bewegt. Hierdurch wird über den Winkelhebel 44 der Hebel 40 um seinen Drehpunkt 39 im Gegenuhrzeigersinn bewegt, und der Winkelhebel 44 wird dabei in Fig. 8 nach rechts gezogen. Er kann sich zunächst noch nicht um seinen Drehpunkt 45 drehen, denn die Rolle 54 wird durch die Nockenfläche 57 niedergehalten. Hierdurch bleibt der Gummistempel 52 weiterhin auf der Folienbahn 19 aufgedrückt und zieht diese wunschgemäß um die erwähnten 5 mm zurück. Dadurch wird ein sauberer Schnitt erreicht und ein Ausfransen des Verstärkungsstreifens vermieden. Nach Durchlauf der Rückziehbewegung, über den Weg von 5 mm ist die Knickstelle zwischen der Nockenfläche 57 und der Schrägfläche 55 des Führungswinkels 56 erreicht, und durch die Schwergängigkeit des oberen Drehpunktes 39 des Hebels 40 kann sich nun der Winkelhebel 44 um seinen Drehpunkt 45 in Uhrzeigerrichtung drehen, weil die Rolle 54 entlang der Schrägfläche 55 hochlaufen kann. Hierdurch aber wird der Gummistempel 52 von der Folie abgehoben und kann sich wieder zurück gemäß Fig. 9 aus der mit ausgezogenen Linien gezeigten Stellung in die Position 52 C bewegen.

Synchron hierzu gesteuert tritt die Rücklaufsperre wieder dadurch in Aktion, daß der drehbare Keil 48 auf die Gummileiste 47 gedrückt wird. Während der beschriebenen Schwenkbewegung des Hebels 40 um seinen Drehpunkt 39 im Gegenuhrzeigersinn erfolgt wieder die Bewegung der Nachzugrolle 37 aus ihrer Position A in die Position B zum Nachziehen von Folienband 19.

Nun wiederholt sich der Arbeitstakt in der vorstehend beschriebenen Weise wiederum.

## Patentansprüche

1. Packung für fließfähige Füllgüter, bestehend aus mit Hilfe mindestens einer Siegelnaht (4) verbundenen Seiten- und Endwänden (1—3) aus beschichtetem Papier, Karton oder dergleichen, in welchem Biegelinien (7) vorgesehen sind, dadurch gekennzeichnet, daß im Bereich mindestens einiger Biegelinien (7) wenigstens ein diese übergreifender Verstärkungsstreifen (15) aus Kunststoff derart angebracht ist, daß die Schweiß- und Kontaktfläche (29) des Verstärkungsstreifens (15) mit dem beschichteten Karton (61, 62) von allen Seiten her im Abstand vor den Biegelinien (7) endet.

2. Packung nach Anspruch 1, dadurch gekennzeichnet, daß der Verstärkungsstreifen (15) im Bereich mindestens einiger solcher Stellen angebracht ist, wo wenigstens zwei Biegelinien (7) zusammenlaufen.

3. Packung nach Anspruch 1 oder 2, dadurch gekennzeichnet, daß der Bereich der Biegelinien (7) auf die Klotzbodenzone (3) an einem Ende der Packung beschränkt ist.

4. Packung nach einem der Ansprüche 1 bis 3, dadurch gekennzeichnet, daß sich der Bereich der Biegelinie (7) auf dem Zuschnitt (30—31) der Packung nur auf dessen einem Rand befindet und der Verstärkungsstreifen (15) die Form eines länglichen Rechtecks hat.

5. Vorrichtung zur Herstellung der Packung nach einem der Ansprüche 1 bis 4, mit einer auf einer Seite der beschichteten Papierbahn angeordneten Vorratsrolle einer Kunststoffolie und mit zwei gegeneinanderwirkenden Siegelbakken, von denen mindestens eine beweglich angeordnet ist, dadurch gekennzeichnet, daß die der zu behandelnden Oberfläche (62) der Papierbahn (61) zugerichtete Fläche (26) der Siegelbakke (23) wenigstens teilweise entsprechend dem Muster der Biegelinien (7) angeordnete Nuten (27) aufweist.

6. Vorrichtung nach Anspruch 5, dadurch gekennzeichnet, daß quer zur Transportrichtung (16) der Papierbahn (61) verlaufend die Drehachse (17) der Vorratsrolle (18) angeordnet ist.

7. Vorrichtung nach Anspruch 5 oder 6, dadurch gekennzeichnet, daß die auf der zu behandelnden Seite (62) der Papierbahn (61) angeordnete Siegelbacke (23) etwa senkrecht zur Ebene der Papierbahn (61) beweglich angetrieben (24) und mit einer Trennschweißeinrichtung (25) versehen ist.

8. Vorrichtung nach einem der Ansprüche 5 bis 7, dadurch gekennzeichnet, daß mindestens eine synchron zur Bewegung der Siegelbacke (23) gesteuert bewegbare Klemmeinrichtung (52; 47, 48) zum Vorschieben der Kunststoffolie (19) um die Breite des Verstärkungsstreifens (15) zwischen Siegelbacke (23) und Papierbahn (61) vorgesehen ist.

## Claims

1. A pack for filling materials which are capable of flow, comprising side and end walls (1—3) which are connected by means of at least one sealing seam (4) and which comprise coated paper, cardboard or the like in which bend lines (7) are provided, characterised in that disposed in the region of at least some bend lines (7) is at least one plastics reinforcing strip (15) which extends over said at least some bend lines (7), in such a way that the welding and contact surface (29) of the reinforcing strip (15), with the coated cardboard (61, 62), terminates from all sides at a spacing before the bend lines (7).

2. A pack according to claim 1 characterised in that the reinforcing strip (15) is disposed in the region of at least some of those positions where at least two bend lines (7) converge.

3. A pack according to claim 1 or claim 2 characterised in that the region of the bend lines (7) is restricted to the block bottom zone (3) at one end of the pack.

4. A pack according to one of claims 1 to 3 characterised in that the region of the bend lines (7) is disposed on the blank (30—31) of the pack only on the one edge thereof, and the reinforcing strip (15) is in the shape of an elongate rectangle.

5. Apparatus for producing the pack according to one of claims 1 to 4 comprising a plastics film supply roll disposed on one side of the web of coated paper, and two sealing jaws which operate in opposite relationship to each other, at least one of which is arranged movably, characterised in that the surface (26) of the sealing jaw (23), which faces towards the surface (62) of the web of paper (61) which is to be treated has grooves (27) at least in part arranged to correspond to the pattern of the bend lines (7).

6. Apparatus according to claim 5 characterised in that the axis of rotation (17) of the supply roll (18) is arranged to extend transversely with respect to the direction of transportation movement (16) of the web of paper (61).

7. Apparatus according to claim 5 or claim 6 characterised in that the sealing jaw (23) which is disposed on the side (62) of the web of paper (61) which is to be treated is driven (24) movably substantially normal to the plane of the web of paper (61) and is provided with a severing welding means (25).

8. Apparatus according to one of claims 5 to 7 characterised in that there is provided at least one clamping means (52; 47, 48) which is movable controlled synchronously with respect to the movement of the sealing jaw (23) for advancing the plastics film (19) by the width of the reinforcing strip (15) between the sealing jaw (23) and the web of paper (61).

## Revendications

1. Récipient pour produits fluides comprenant des parois latérales et d'extrémité (1, 3) de papier, carton enduit ou similaire, reliées à l'aide d'une soudure d'étanchéité (4) au moins, où des traits de pliage (7) ont été prévus, caractérisé en ce que dans la zone de quelques traits de pliage (7) au moins, une bande de renforcement (15) les recouvrant est appliquée de telle manière que la surface de soudage et de contact (29) de la bande de renforcement (15) finit sur le carton enduit (61, 62) de tous les côtés à une certaine distance en avant des traits de pliage (7).

2. Récipient selon revendication 1, caractérisé en ce que la bande de renforcement (15) est disposée dans la zone de certains emplacements où passent deux traits de pliage (7) au moins.

3. Récipient selon revendication 1 ou 2, caractérisé en ce que la zone des traits de pliage (7) est limitée à la zone du fond en culot (3) d'une extrémité du récipient.

4. Récipient selon revendication 1 à 3, caractérisé en ce que la zone des traits de pliage (7) de la découpe (30, 31) du récipient, ne se trouve que sur l'un de ses bords et que la bande de renforcement (15) a la forme d'un quadrilatère rectangle oblong.

5. Dispositif de confection du récipient conforme à l'une des revendications 1 à 4, avec rouleau d'alimentation d'une feuille plastique sur l'un des côtés de la feuille continue de papier et deux mâchoires de soudage agissant en opposition, dont l'une d'entre elles au moins est mobile, caractérisé en ce que la surface (26) de la mâchoire de soudage (23) disposée sur la surface à traiter (62) de la feuille de papier (61) comporte des rainures (27) disposées tout au moins en partie selon le dessin des traits de pliage.

6. Dispositif selon revendication 5, caractérisé en ce que l'axe de rotation (17) de la bobine d'alimentation (18) est disposé transversalement au sens de passage (16) de la feuille continue de papier (61).

7. Dispositif selon revendication 5 ou 6, caractérisé en ce que la mâchoire de soudage (23) disposée sur la face à traiter (62) de la feuille continue de papier (61) est entraînée en mouvement à peu près perpendiculairement au plan de la feuille de papier (61) et munie d'un dispositif d'exécution d'une soudure de séparation (25).

8. Disposition selon l'une des revendications 5 à 7, caractérisé en ce qu'un mécanisme de serrage mobile (52; 47, 48) commandé en synchronisme avec le mouvement de la mâchoire de soudage (23) est prévu pour avancer la feuille plastique (19) de la largeur de la bande de renforcement (15) entre la mâchoire de soudage (23) et la feuille continue de papier (61).

Fig. 1

0 076 979

Fig. 2

Fig. 3

# Fig.4

## Fig. 5

## Fig. 6

## Fig. 6a

Fig. 7

# Fig. 8

# Fig. 9